# FASCICULE DE BREVET EUROPEEN

(11) **EP 4 277 800 B1**
(45) Date de publication et mention de la délivrance du brevet: **01.01.2025**
(21) Numéro de dépôt: 22700410.8
(22) Date de dépôt: 17.01.2022
(51) Int. Cl.: B60K 1/00, B60K 11/02, B60K 17/04, B60K 17/16, H02K 5/20

(54) **ENSEMBLE DE TRANSMISSION DE VÉHICULE ET PROCÉDÉ D'ASSEMBLAGE D'UN ENSEMBLE DE TRANSMISSION DE VÉHICULE**
FAHRZEUGGETRIEBEANORDNUNG UND VERFAHREN ZUR MONTAGE EINER FAHRZEUGGETRIEBEANORDNUNG
VEHICLE TRANSMISSION ASSEMBLY AND METHOD FOR ASSEMBLING A VEHICLE TRANSMISSION ASSEMBLY

(30) Priorité: 18.01.2021 FR 2100435
(43) Date de publication de la demande: 22.11.2023
(73) Titulaire: VALEO EMBRAYAGES, 80009 Amiens (FR)
(72) Inventeur: LEBEAU, Fabien, 80000 Amiens (FR)
(74) Mandataire: Valeo Powertrain Systems
(86) Numéro de dépôt international: PCT/EP2022/050870
(87) Numéro de publication internationale: WO 2022/152897

(56) Documents cités:
- WO-A1-2019/159522
- WO-A1-2020/069744
- CN-U- 204 271 815
- FR-A1- 3 056 840
- FR-A1- 3 086 124

## Description

### Domaine technique

L'invention se rapporte à un ensemble de transmission, notamment pour un véhicule électrique ou hybride, ainsi qu'à son procédé d'assemblage.

### Etat de la technique antérieure

Dans le document FR3086124 A1, un palier avant d'un boitier de machine électrique est fixé sur un carter de transmission. La fixation est réalisée radialement à l'extérieur de la machine électrique et les zones de fixation génèrent un encombrement supplémentaire préjudiciable. Or la compacité est une contrainte de conception importante des groupes motopropulseurs.

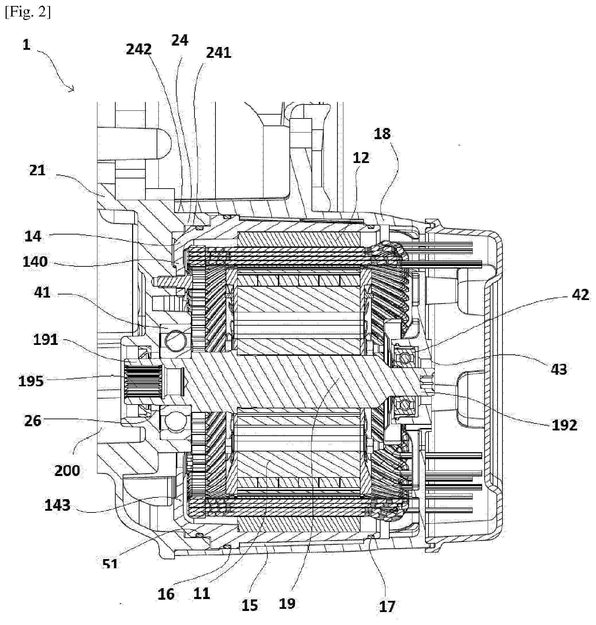

De plus, le palier avant, qui assure aussi le support du stator, est monté rotatif autour de l'arbre de transmission via un roulement (voir [fig.2]). Le palier avant est donc susceptible d'encaisser différents efforts, ces efforts pouvant provenir de la rotation du rotor (balourd) ou du réducteur en fonction de l'architecture du groupe motopropulseur.

Il est également divulgué dans ce document de délimiter une chambre de refroidissement avec une face radialement externe du palier avant et une face radialement interne du palier arrière. La chambre de refroidissement est isolée par des joints disposés dans des gorges ménagées dans le palier avant de part et d'autre de la chambre de refroidissement.

L'invention vise à remédier aux inconvénients de l'état de la technique et à proposer un ensemble de transmission peu encombrant, tout en assurant une bonne étanchéité entre la machine électrique et le mécanisme de transmission (boite de vitesse) ainsi qu'au niveau de la chambre de refroidissement. L'invention vise également à faciliter la fabrication de cet ensemble de transmission.

Pour ce faire est proposé, selon un premier aspect de l'invention, un ensemble de transmission pour un véhicule, ledit ensemble de transmission comportant :
- une machine électrique comprenant un rotor mobile en rotation autour d'un premier axe de rotation (X) et un stator agencé radialement à l'extérieur du rotor,
- un dispositif de transmission comprenant un arbre de transmission entrainé par le rotor et s'étendant le long du premier axe de rotation X, un arbre de sortie et un mécanisme de transmission agencé de manière à transmettre le couple entre l'arbre de transmission et l'arbre de sortie,
- un carter de transmission définissant un espace interne à l'intérieur duquel est disposé au moins une partie du mécanisme de transmission, notamment une roue dentée entrainée par l'arbre de transmission,

- un support de stator présentant un logement interne s'étendant le long du premier axe de rotation (X), le stator étant fixé au support de stator à l'intérieur de ce logement interne,
- une chambre de refroidissement délimitée en partie par une face radialement externe du support de stator, le support de stator comprenant deux gorges annulaires s'étendant autour du premier axe de rotation (X) et disposées axialement de part et d'autre de la chambre de refroidissement, chaque gorge annulaire accueillant un joint annulaire disposé de manière à assurer l'étanchéité de la chambre de refroidissement.

Selon l'invention, le support de stator est formé dans une pièce distincte du carter de transmission et comprend une zone de fixation fixée sur le carter de transmission; la zone de fixation étant située plus proche du premier axe de rotation (X) que le stator.

Autrement dit, la zone de fixation est située radialement à l'intérieur du stator.

Ainsi, La zone de fixation étant située radialement à l'intérieur du stator, elle est facilement accessible avant l'introduction du rotor et elle ne génère pas d'encombrement supplémentaire comme lorsque les points de fixation sont radialement à l'extérieur du stator.

En outre, le fait d'avoir un support de stator formé dans une pièce distincte du carter de transmission permet d'usiner plus facilement les gorges, en particulier lorsque le carter de transmission a une portion recouvrant radialement la chambre de refroidissement du stator.

De plus, l'ensemble de transmission est davantage modulaire et il est plus facile de personnaliser l'ensemble de transmission lorsque des évolutions doivent être apportées à la machine électrique seule.

L'ensemble de transmission peut comporter aussi une ou plusieurs des caractéristiques suivantes :
- Le stator est sensiblement cylindrique et présente un diamètre intérieur situé à une première distance du premier axe de rotation X. La deuxième distance séparant la zone de fixation du premier axe de rotation X est inférieure à la première distance.
- L'ensemble de transmission comprend aussi une enveloppe externe de machine électrique disposée radialement à l'extérieur du support de stator; la chambre de refroidissement étant délimitée en partie par une face radialement interne de l'enveloppe externe de machine électrique.
- De préférence, l'enveloppe externe de machine électrique a globalement une forme cylindrique ou tronconique s'étendant le long du premier axe de rotation X.
- De préférence, la chambre de refroidissement a globalement une forme cylindrique ou tronconique s'étendant autour du premier axe de rotation X.
- De préférence, la chambre de refroidissement cylindrique ou tronconique est délimitée uniquement par l'enveloppe externe de machine électrique et par le support de stator.
- Selon un mode de réalisation, l'enveloppe externe de machine électrique est formée dans une pièce distincte du carter de transmission, la pièce dans laquelle l'enveloppe externe de machine électrique est réalisée formant ainsi un carter de machine électrique.
- Selon un autre mode de réalisation, l'enveloppe externe de machine électrique est formée dans une portion cylindrique ou tronconique du carter de transmission s'étendant axialement. Autrement dit, l'enveloppe externe de machine électrique est formée d'un seul tenant dans le carter de transmission.
- Le cas échéant, un couvercle referme cette portion cylindrique du carter de transmission.
- De préférence, un premier palier, notamment un premier palier à roulements, est intercalé radialement entre le carter de transmission et l'arbre de transmission.
- De préférence, le premier palier est logé dans une paroi du carter de transmission située axialement du côté de la machine électrique.
- De préférence, le premier palier est situé à l'extérieur de l'espace interne du carter de transmission. L'espace interne est étanche et est délimité par ses parois ainsi que par les joints disposés dans ses ouvertures.
- De préférence, le premier palier est disposé radialement à l'intérieur de la zone de fixation du support de stator.
- Selon une variante, il existe un plan perpendiculaire au premier axe de rotation X qui coupe à la fois le premier palier et la zone de fixation du support de stator.
- De préférence, le support de stator est agencé à distance du premier palier. Ainsi, en n'étant pas au contact du premier palier, le support de stator n'encaisse pas les efforts venant des arbres et des engrenages du mécanisme de transmission.
- De préférence, le support de stator comprend un flasque agencé autour du premier axe de rotation X.
- De préférence, le flasque se développe dans un plan perpendiculaire au premier axe de rotation X.
- De préférence, la zone de fixation du support de stator est située sur ce flasque.
- La zone de fixation s'étend autour du premier axe de rotation X de façon continue ou discontinue.
- Le support de stator et le carter de transmission présentent une interface de liaison commune; l'interface de liaison commune étant formée sur un plan, de préférence un plan perpendiculaire au premier axe de rotation X. Ce plan passe si on le souhaite par le premier palier. Autrement dit, il existe un plan perpendiculaire au premier axe de rotation X passant par l'interface de liaison commune et le premier palier.
- Le support de stator et le carter de transmission sont assemblés l'un contre l'autre avec des éléments d'assemblage tels que des vis ou des rivets. Ainsi chaque zone de vissage ou de rivetage forme une portion de la zone d'assemblage qui est alors discontinue autour du premier axe de rotation.
- De façon alternative, le carter de transmission et le support de stator sont soudés l'un à l'autre de façon continue ou discontinue autour du premier axe de rotation X.
- De préférence, le carter de transmission comporte une zone de liaison coopérant avec la zone de fixation du support de stator, la zone de liaison comprenant un premier groupe de trous et la zone de fixation du support de stator comprenant un deuxième groupe de trous agencés axialement en vis-à-vis du premier groupe de trous, et les éléments d'assemblage tels que des vis assurent l'assemblage du support de stator et du carter de transmission.
- De préférence, les trous du premier groupe de trous sont des trous borgnes. Ainsi, l'étanchéité du réducteur est assurée.
- Les éléments d'assemblage sont des vis et les trous du premier groupe de trous sont taraudés.
- Chaque élément d'assemblage coopère avec un trou borgne.
- Les trous du deuxième groupe de trous peuvent être des trous traversant.
- De préférence, les trous du premier groupe de trous et du deuxième groupe de trous s'étendent axialement.
- De préférence, le support de stator comprend une portion cylindrique dans laquelle est emmanchée le stator.
- De préférence, le stator présente un diamètre extérieur D et le stator est porté par le support de stator sur son diamètre extérieur D, notamment par frettage ou emmanchement.
- De préférence, le carter de transmission comprend une première pièce de carter ayant une première portion dotée de la zone de liaison coopérant avec la zone de fixation du support de stator, et une deuxième portion recouvrant radialement une partie de l'enveloppe externe de machine électrique de sorte qu'il existe un plan perpendiculaire au premier axe de rotation X qui traverse la chambre de refroidissement et qui coupe la deuxième portion de la première pièce de carter. Ainsi, malgré la présence de la deuxième portion de la première pièce de carter au-dessus d'au moins une gorge, celle-ci peut être usinée facilement avant montage du support de stator sur la première pièce de carter.
- Le cas échéant, la première portion et la deuxième portion de l'ensemble de transmission recouvrent chacune une partie du mécanisme de transmission.
- Autrement dit, la première portion et la deuxième portion de la première pièce de carter sont donc réalisées d'un seul tenant.
- De préférence, un différentiel est agencé au moins en partie dans la deuxième portion de la première pièce de carter. Ainsi, la conception du carter et du support de stator permet de s'adapter à des architectures de groupe motopropulseur particulières, notamment avec un différentiel agencé en recouvrement de la machine électrique. Aussi, avoir une pièce de carter de transmission commune coopérant avec la zone de fixation et enveloppant aussi tout ou partie du différentiel permet de simplifier la conception et l'assemblage du groupe motopropulseur dans son ensemble.
- Un dispositif de déconnexion apte à interrompre la transmission du couple entre la machine électrique et l'arbre de sortie peut aussi être agencé au moins en partie dans la deuxième portion de la première pièce de carter.
- La première pièce de carter est dotée d'une ouverture dans laquelle passe l'arbre de transmission.
- Le premier palier est intercalé radialement entre la première pièce de carter et l'arbre de transmission.
- L'ensemble de transmission est un essieu de transmission électrique ou groupe motopropulseur électrique pouvant être monté sur un train avant d'automobile ou un train arrière d'automobile.
- La machine électrique peut être du type synchrone ou asynchrone, basse tension ou haute tension.
- Par exemple, la tension de la machine électrique est supérieure ou égale à 48V, par exemple supérieure ou égale à 72V.
- Selon un mode de réalisation, le carter de machine électrique présente une forme de cloche à l'intérieur de laquelle sont disposés le support de stator, le stator, et le rotor.
- De préférence, le carter de machine électrique ou le couvercle comprend un alésage à l'intérieur duquel un deuxième palier, notamment un palier à roulements est monté, l'arbre de transmission étant monté rotatif par rapport au carter de machine électrique ou par rapport au couvercle par l'intermédiaire de ce deuxième palier.
- Selon un mode de réalisation, l'arbre de transmission comprend un premier tronçon et un deuxième tronçon aboutés l'un à l'autre et montés solidaires en rotation l'un de l'autre autour du premier axe de rotation X, par exemple au moyen de cannelures.
- De préférence, le premier tronçon est monté solidaire en rotation du rotor par rapport au premier axe de rotation X, à l'intérieur du rotor. Notamment, le premier tronçon est fixé directement sur le rotor.- De préférence, le deuxième tronçon est monté solidaire en rotation d'une roue dentée du mécanisme de transmission.
- Le premier tronçon de l'arbre de transmission comprend une première zone d'extrémité et une deuxième zone d'extrémité, la première zone d'extrémité étant montée à l'intérieur du premier palier et la deuxième zone d'extrémité étant montée à l'intérieur du deuxième palier.
- De préférence, le carter de transmission présente une première surface de centrage s'étendant autour du premier axe de rotation X. Le cas échéant, le support de stator est centré sur cette première surface de centrage.
- De préférence, la première surface de centrage est cylindrique, par exemple en forme de cylindre droit.
- Le support de stator comprend une surface de centrage coopérant avec la première surface de centrage du carter de transmission.
- De préférence, le carter de transmission présente une deuxième surface de centrage s'étendant autour du premier axe de rotation (X). Le cas échéant, le carter de machine électrique est centré sur cette deuxième surface de centrage.
- De préférence, la deuxième surface de centrage est cylindrique, par exemple en forme de cylindre droit.
- De préférence, le carter de machine électrique comprend une surface de centrage coopérant avec la deuxième surface de centrage du carter de transmission.
- Notamment, la surface de centrage du carter de machine électrique est située à l'entrée de la cloche, autrement dit dans l'ouverture de la cloche qui est la plus grande.
- Notamment, la surface de centrage du carter de machine électrique et le trou du carter de machine électrique sont disposés axialement l'un à l'opposé de l'autre.
- De préférence, la première surface de centrage du carter de transmission est tournée radialement vers l'intérieur.
- De préférence, la deuxième surface de centrage du carter de transmission est tournée radialement vers l'extérieur.
- De préférence, le carter de transmission comprend un anneau de centrage agencé autour du premier axe de rotation X et faisant saillie axialement vers le stator.
- De préférence, la première surface de centrage est disposée sur la face radialement interne de cet anneau de centrage.
- De préférence, la deuxième surface de centrage est disposée sur la face radialement externe de cet anneau de centrage.
- Selon un mode de réalisation, la deuxième portion de la première pièce du carter de transmission recouvre les deux gorges.
- Avantageusement, le mécanisme de transmission comprend un réducteur entrainé par le rotor de la machine électrique par l'intermédiaire de l'arbre de transmission.
- De préférence, l'arbre de sortie d'étend parallèlement à l'arbre de transmission le long d'un deuxième axe de rotation Y.
- Selon un mode de réalisation, une troisième gorge annulaire est ménagée dans le support de stator et un joint annulaire est disposé dans cette gorge annulaire pour assurer une étanchéité entre le support de stator et le carter de transmission. Une cavité peut être formée entre ce joint annulaire et la zone de fixation du support de stator.
- Le cas échéant, la troisième gorge est disposée radialement en vis-à-vis de l'anneau de centrage, à l'intérieur de l'anneau de centrage.

L'invention concerne aussi un procédé d'assemblage d'un ensemble de transmission pour un véhicule, ledit procédé d'assemblage comprenant les étapes suivantes :
- fournir un rotor et un stator de machine électrique,
- fournir un dispositif de transmission comprenant au moins une partie d'un arbre de transmission apte à être entraînée par le rotor et s'étendant le long d'un premier axe de rotation X, un arbre de sortie et un mécanisme de transmission agencé de manière à transmettre le couple entre l'arbre de transmission et l'arbre de sortie, ainsi qu'un carter de transmission définissant un espace interne à l'intérieur duquel est disposé au moins une partie du mécanisme de transmission, notamment un pignon entraîné par l'arbre de transmission,
- fournir un support de stator comprenant une chambre de refroidissement délimitée en partie par une face radialement externe du support de stator, le support de stator comprenant deux gorges annulaires s'étendant autour du premier axe de rotation (X) et disposées axialement de part et d'autre de la chambre de refroidissement, chaque gorge annulaire pouvant accueillir un joint annulaire disposé de manière à assurer l'étanchéité de la chambre de refroidissement, le support de stator étant formé dans une pièce distincte du carter de transmission et le support de stator comprenant une zone de fixation, le carter de transmission comportant une zone de liaison coopérant avec la zone de fixation (140) du support de stator,
le procédé d'assemblage comprenant en outre les étapes suivantes :
- monter le stator dans le logement interne du support de stator (14) et fixer la zone de fixation du support de stator sur la zone de liaison du carter de transmission de telle sorte que le rotor et le stator s'étendent le long du premier axe de rotation X, la zone de fixation (140) étant située plus proche du premier axe de rotation (X) que le stator (12),
- puis monter le rotor mobile en rotation autour du premier axe de rotation (X) et solidaire en rotation de ladite au moins une partie de l'arbre de transmission (19), radialement à l'intérieur du stator.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La [fig.1] est un schéma de principe d'un ensemble de transmission correspondant à un premier mode de réalisation.
[fig.2] La [fig.2] est une vue en coupe d'un ensemble de transmission selon le premier mode de réalisation.
[fig.3] La [fig.3] est une vue en coupe en zoom de la zone de fixation de l'ensemble de transmission de la [fig.2].
[fig.4] La [fig.4] est une vue isométrique éclatée de l'ensemble de transmission de la [fig.2].
[fig.5] La [fig.5] est un schéma de principe d'un ensemble de transmission correspondant à un deuxième mode de réalisation.

### Description des modes de réalisation

Dans la description et les revendications, on utilisera, les termes "externe" et "interne" ainsi que les orientations "axiale" et "radiale" pour désigner, selon les définitions données dans la description, des éléments de l'ensemble de transmission. Par convention, le premier axe de rotation X de l'ensemble de transmission détermine l'orientation "axiale" et une orientation "radiale" est dirigée orthogonalement à l'orientation axiale en coupant le premier axe de rotation X. L'orientation "circonférentielle" est dirigée orthogonalement au premier axe de rotation et orthogonalement à une direction radiale. Les termes "externe" et "interne" sont utilisés pour définir la position relative d'un élément par rapport à un autre, par référence au premier axe X de rotation de l'ensemble de transmission, un élément proche du premier axe de rotation X étant ainsi qualifié d'interne par opposition à un élément externe situé radialement en périphérie.

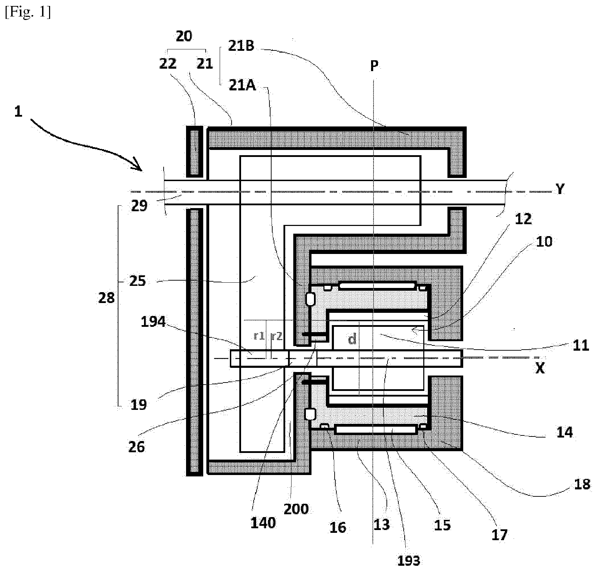

On décrit ci-dessous, en relation avec les figures 1 à 4 un ensemble de transmission selon un premier mode de réalisation.

Le schéma de principe de la [fig. 1] présente de façon simplifiée un ensemble de transmission 1 pour un véhicule. Cet ensemble de transmission 1 comprend une machine électrique 10 comprenant un rotor 11 mobile en rotation autour d'un premier axe de rotation X et un stator 12 agencé radialement à l'extérieur du rotor.

L'ensemble de transmission 1 comporte également un dispositif de transmission 28 comprenant un arbre de transmission 19 entrainé par le rotor 11 et s'étendant le long du premier axe de rotation X, ainsi qu'un arbre de sortie 29 et un mécanisme de transmission 25 agencé de manière à transmettre le couple entre l'arbre de transmission 19 et l'arbre de sortie 29.

Un carter de transmission 20 définit un espace interne 200 à l'intérieur duquel est disposé au moins une partie du mécanisme de transmission 25, notamment une roue dentée entraînée par l'arbre de transmission 19.

L'ensemble de transmission 1 comporte également un support de stator 14 présentant un logement interne s'étendant le long du premier axe de rotation X. Le stator 12 est fixé au support de stator 14 à l'intérieur de ce logement interne.

Une chambre de refroidissement 15 est délimitée en partie par une face radialement externe du support de stator 14. Le support de stator 14 comprend deux gorges annulaires 16 et 17 s'étendant autour du premier axe de rotation X et disposées axialement de part et d'autre de la chambre de refroidissement 15. Chaque gorge annulaire 16 et 17 peut recevoir un joint annulaire disposé de manière à assurer l'étanchéité de la chambre de refroidissement 15.

Le support de stator 14 est formé dans une pièce distincte du carter de transmission 20 et comprend une zone de fixation 140 fixée sur le carter de transmission 20.

La zone de fixation 140 est située plus proche du premier axe de rotation X que le stator 12. Autrement dit, la zone de fixation 140 est située radialement à l'intérieur du stator. Ainsi, la zone de fixation 140 est facilement accessible avant l'introduction du rotor et elle ne génère pas d'encombrement supplémentaire contrairement aux ensembles de transmission dont les points de fixation correspondants sont radialement à l'extérieur du stator.

Le stator 12 est sensiblement cylindrique et présente un diamètre intérieur d situé à une première distance r1 du premier axe de rotation X. La deuxième distance r2 séparant la zone de fixation 140 du premier axe de rotation X est donc inférieure à la première distance r1.

L'ensemble de transmission comprend aussi une enveloppe externe de machine électrique 13 disposée radialement à l'extérieur du support de stator 14.

La chambre de refroidissement 15 est délimitée en partie par une face radialement interne de l'enveloppe externe de machine électrique 13. Ici, la chambre de refroidissement 15 est délimitée uniquement par l'enveloppe externe de machine électrique 13 et par le support de stator 14.

Sur ce schéma, l'enveloppe externe de machine électrique 13 et la chambre de refroidissement 15 ont globalement une forme cylindrique s'étendant le long du premier axe de rotation X.

Selon le premier mode de réalisation, l'enveloppe externe de machine électrique 13 est formée dans une pièce distincte du carter du carter de transmission 20. La pièce dans laquelle l'enveloppe externe de machine électrique 13 est réalisée forme ici un carter de machine électrique.

Sur la [fig.2], un premier mode de réalisation est représenté de façon plus détaillé. Sur cette figure, on s'aperçoit par exemple que l'enveloppe externe de machine électrique 13 et la chambre de refroidissement 15 ont une forme globale légèrement tronconique s'étendant le long du premier axe de rotation X.

Un premier palier à roulements 41 est intercalé radialement entre le carter de transmission 20 et l'arbre de transmission 19. Ce premier palier à roulements 41 est logé dans une paroi du carter de transmission située axialement du côté de la machine électrique.

Le premier palier 41 est situé à l'extérieur de l'espace interne 200 du carter de transmission 20. L'espace interne 200 est de préférence étanche et est délimité par ses parois ainsi que par les joints disposés dans ses ouvertures.

Le premier palier 41 est disposé radialement à l'intérieur de la zone de fixation 140 du support de stator 14. Il existe un plan perpendiculaire au premier axe de rotation X qui coupe à la fois le premier palier 41 et la zone de fixation du support de stator. Le support de stator 14 est agencé à distance du premier palier 41. Ainsi, en n'étant pas au contact du premier palier, le support de stator n'encaisse pas les efforts venant des arbres et des engrenages du mécanisme de transmission.

Le support de stator 14 et le carter de transmission 20 présentent une interface de liaison commune; l'interface de liaison commune étant formée sur un plan perpendiculaire au premier axe de rotation X. Ce plan passe par le premier palier 41.

Comme on peut le voir sur la [fig.2], le support de stator 14 comprend un flasque 143 agencé autour du premier axe de rotation X et la zone de fixation 140 du support de stator est située sur ce flasque 143. Le flasque 143 se développe dans un plan perpendiculaire au premier axe de rotation X.

La zone de fixation peut s'étendre autour du premier axe de rotation X de façon continue ou discontinue.

Dans le mode de réalisation représenté sur la [fig.2], le support de stator 14 et le carter de transmission 20 sont assemblés l'un contre l'autre avec des pièces d'assemblage tels que des vis ou des rivets. Ainsi chaque zone de vissage ou de rivetage forme une portion de la zone d'assemblage qui est alors discontinue autour du premier axe de rotation.

De façon alternative, le carter de transmission et le support de stator peuvent être soudés l'un à l'autre de façon continue ou discontinue autour du premier axe de rotation X.

Le carter de transmission comporte une zone de liaison coopérant avec la zone de fixation 140 du support de stator 14. La zone de liaison du carter de transmission comprend un premier groupe de trous et la zone de fixation 140 du support de stator 14 comprend un deuxième groupe de trous agencés axialement en vis-à-vis du premier groupe de trous, et une pluralité de vis assure l'assemblage du support de stator 14 et du carter de transmission 20.

Avantageusement, les trous du premier groupe de trous sont des trous borgnes. Ainsi, l'étanchéité avec le carter de transmission 20 est assurée au niveau de la zone de fixation 140.

Les trous du deuxième groupe de trous peuvent être des trous traversant. Les trous du premier groupe de trous et du deuxième groupe de trous s'étendent de préférence axialement.

Le support de stator 14 comprend une portion cylindrique à l'intérieur de laquelle est emmanchée le stator. Le stator présente un diamètre extérieur D et le stator est porté par le support de stator 14 sur son diamètre extérieur D, notamment par frettage ou emmanchement.

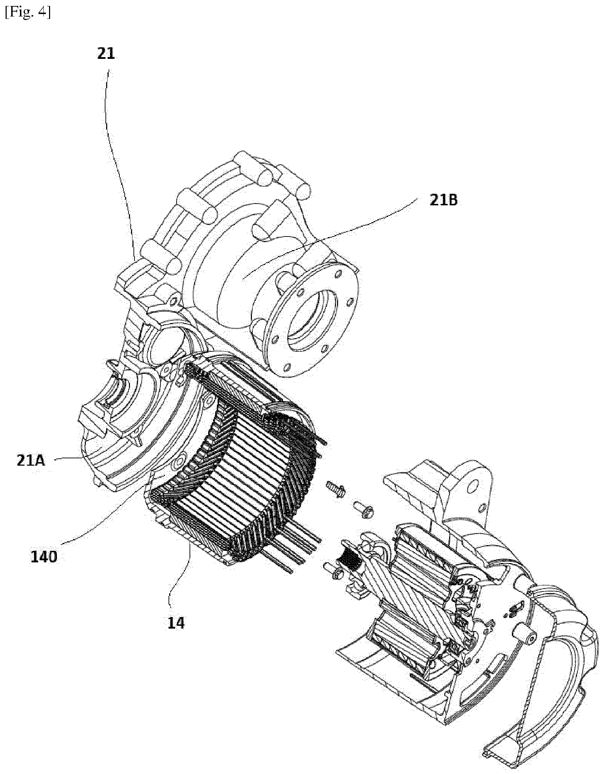

Il faut se reporter aux figures 1 et 4 pour visualiser l'ensemble de transmission dans son ensemble. L'ensemble de transmission est un groupe motopropulseur électrique pouvant être monté sur un train avant d'automobile ou un train arrière d'automobile. La machine électrique peut être du type synchrone ou asynchrone, basse tension ou haute tension. Par exemple, la tension de la machine électrique est supérieure ou égale à 48V, par exemple supérieure ou égale à 72V.

Avantageusement, le mécanisme de transmission comprend un réducteur 20 entrainé par le rotor 11 de la machine électrique 10 par l'intermédiaire de l'arbre de transmission 19.

L'arbre de sortie du dispositif de transmission s'étend parallèlement à l'arbre de transmission 19 (et au premier axe de rotation X) le long d'un deuxième axe de rotation Y.

On voit que le carter de transmission 20 comprend une première pièce de carter 21 ayant une première portion 21A dotée de la zone de liaison coopérant avec la zone de fixation 140 du support de stator 14, et une deuxième portion 21B recouvrant radialement une partie de l'enveloppe externe de machine électrique 13. Autrement dit, la première portion 21A et la deuxième portion 21B de première pièce de carter 21 sont donc réalisées d'un seul tenant. Il existe un plan P perpendiculaire au premier axe de rotation X qui traverse la chambre de refroidissement 15 et qui coupe la deuxième portion 21B de la première pièce de carter 21. Ainsi, malgré la présence de la deuxième portion de la première pièce de carter 21 au-dessus des gorges 16 et 17, celle-ci peut être usinée facilement avant montage du support de stator 14 sur la première pièce de carter 21.

Un différentiel est agencé au moins en partie dans la deuxième portion 21B de la première pièce de carter 21. Avoir une pièce de carter de transmission commune coopérant avec la zone de fixation et enveloppant aussi le différentiel permet de simplifier la conception et l'assemblage du groupe motopropulseur dans son ensemble.

La première pièce de carter 21 est dotée d'une ouverture 26 dans laquelle passe l'arbre de transmission 19. Le premier palier 41 est intercalé radialement entre la première pièce de carter 21 et l'arbre de transmission 19.

Sur la figue 2, on voit que le carter de machine électrique présente ici une forme de cloche à l'intérieur de laquelle sont disposés le support de stator 14, le stator 12, et le rotor 11.

Le carter de machine électrique comprend un alésage à l'intérieur duquel un deuxième palier à roulements 42 est monté, l'arbre de transmission étant monté rotatif par rapport au carter de machine électrique par l'intermédiaire de ce deuxième palier.

L'arbre de transmission 19 comprend un premier tronçon 193 et un deuxième tronçon 194 aboutés l'un à l'autre et montés solidaires en rotation l'un de l'autre autour du premier axe de rotation X, par exemple au moyen de cannelures 195. Le premier tronçon 193 est monté solidaire en rotation du rotor 11 par rapport au premier axe de rotation X, à l'intérieur du rotor 11.

De son côté, le deuxième tronçon est monté solidaire en rotation d'une roue dentée du mécanisme de transmission.

Le premier tronçon 193 de l'arbre de transmission 19 comprend une première zone d'extrémité 191 et une deuxième zone d'extrémité 192, la première zone extrémité étant montée à l'intérieur du premier palier 41 et la deuxième zone d'extrémité étant montée à l'intérieur du deuxième palier 42.

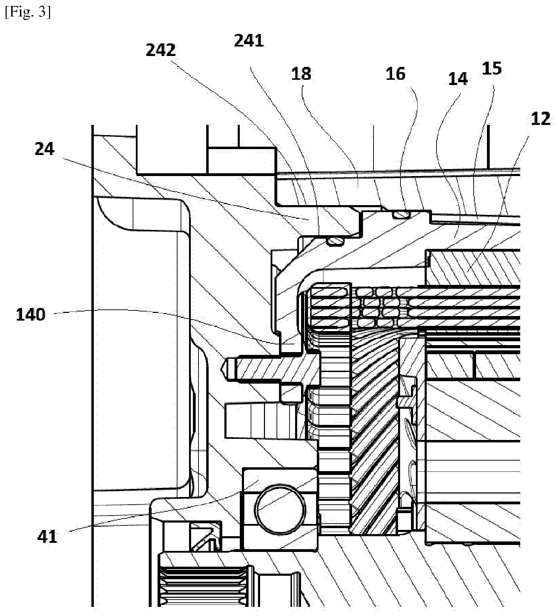

Sur la [fig.3], on peut voir que le carter de transmission 20 présente une première surface de centrage cylindrique 241 s'étendant autour du premier axe de rotation X. La première surface de centrage 241 du carter de transmission 20 est tournée radialement vers l'intérieur. Le support de stator 14 comprend une surface de centrage coopérant avec la première surface de centrage 241 du carter de transmission.

Le carter de transmission 20 présente également une deuxième surface de centrage cylindrique 242 s'étendant autour du premier axe de rotation X. La deuxième surface de centrage 242 du carter de transmission20 est tournée radialement vers l'extérieur.

Le carter de machine électrique comprend une surface de centrage coopérant avec la deuxième surface de centrage 242 du carter de transmission 20. La surface de centrage du carter de machine électrique est située à l'entrée de la cloche, autrement dit dans l'ouverture de la cloche qui est la plus grande. La surface de centrage du carter de machine électrique et le trou 43 du carter de machine électrique sont disposés axialement l'un à l'opposé de l'autre.

Le carter de transmission 20 comprend un anneau de centrage 24 agencé autour du premier axe de rotation X et faisant saillie axialement vers le stator 12. La première surface de centrage 241 est disposée sur la face radialement interne de cet anneau de centrage 24. La deuxième surface de centrage 242 est disposée sur la face radialement externe de cet anneau de centrage 24.

Dans le premier mode de réalisation une troisième gorge annulaire 51 est ménagée dans le support de stator 14 et un joint annulaire est disposé dans cette gorge annulaire pour assurer une étanchéité entre le support de stator 14 et le carter de transmission 20. Une cavité peut être formée entre ce joint annulaire et la zone de fixation du support de stator. Ici, la troisième gorge est disposée radialement en vis-à-vis de l'anneau de centrage 24, à l'intérieur de l'anneau de centrage 24.

Pour l'assemblage de l'ensemble de transmission, le procédé comprend les étapes suivantes :
- fournir le rotor 11 et le stator 12 de machine électrique,
- fournir le dispositif de transmission 28 comprenant au moins une partie de l'arbre de transmission 19 apte à être entraînée par le rotor 11 et s'étendant le long d'un premier axe de rotation X, un arbre de sortie 29 et un mécanisme de transmission 25 agencé de manière à transmettre le couple entre ladite au moins une partie de l'arbre de transmission 19 et l'arbre de sortie 29, ainsi qu'un carter de transmission 20 définissant un espace interne 200 à l'intérieur duquel est disposé au moins une partie du mécanisme de transmission 25, notamment un pignon entrainé par l'arbre de transmission 19,
- fournir un support de stator 14 comprenant une chambre de refroidissement 15 délimitée en partie par une face radialement externe du support de stator 14, le support de stator 14 comprenant deux gorges annulaires 16, 17 s'étendant autour du premier axe de rotation X et disposées axialement de part et d'autre de la chambre de refroidissement 15, chaque gorge annulaire 16, 17 pouvant accueillir un joint annulaire disposé de manière à assurer l'étanchéité de la chambre de refroidissement 15, le support de stator 14 étant formé dans une pièce distincte du carter de transmission 20 et le support de stator 14 comprenant une zone de fixation 140, le carter de transmission comportant une zone de liaison coopérant avec la zone de fixation 140 du support de stator 14.

Le procédé d'assemblage comprend en outre les étapes suivantes :
- monter le stator dans le logement interne du support de stator 14 et fixer la zone de fixation du support de stator sur la zone de liaison du carter de transmission de telle sorte que le rotor et le stator s'étendent le long du premier axe de rotation X, la zone de fixation 140 étant située plus proche du premier axe de rotation X que le stator 12,
- puis monter le rotor mobile en rotation autour du premier axe de rotation X et solidaire en rotation de ladite au moins une partie de l'arbre de transmission 19, radialement à l'intérieur du stator.

Comme évoqué précédemment, le rotor 11 est d'abord solidarisé avec un premier tronçon 193 de l'arbre de transmission 19 avant d'être abouté à un deuxième tronçon 194 de l'arbre de transmission intégrée préalablement au dispositif de transmission 28.

La liaison solidaire en rotation entre les deux tronçons d'arbre peut être assurée par des cannelures complémentaires ou au moyen d'une pièce de jonction telle qu'un manchon d'accouplement.

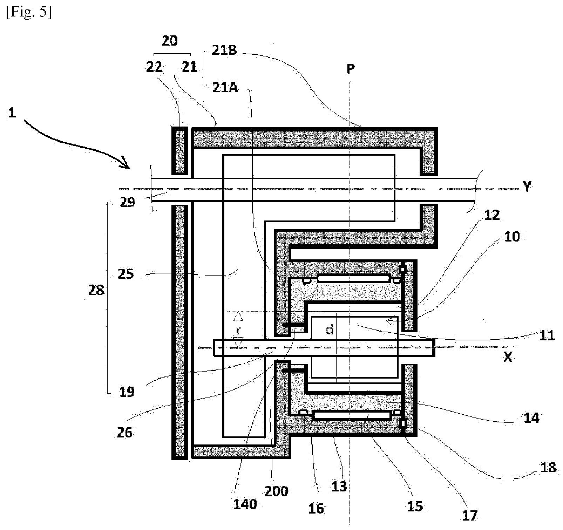

Dans le deuxième mode de réalisation représenté sur la [fig.5], l'enveloppe externe de machine électrique est formée dans une portion cylindrique ou tronconique du carter de transmission 20 s'étendant axialement. Autrement dit, l'enveloppe externe de machine électrique est formée d'un seul tenant dans le carter de transmission 20.

Le cas échéant, un couvercle referme cette portion cylindrique du carter de transmission et le deuxième palier à roulements est alors monté entre le premier tronçon d'arbre de transmission et le couvercle pour monter ces deux éléments mobiles en rotation l'un par rapport à l'autre par rapport au premier axe de rotation X.

## Revendications

1. Ensemble de transmission (1) pour un véhicule, ledit ensemble de transmission comportant :
- une machine électrique (10) comprenant un rotor (11) mobile en rotation autour d'un premier axe de rotation (X) et un stator (12) agencé radialement à l'extérieur du rotor,
- un dispositif de transmission (28) comprenant un arbre de transmission (19) entrainé par le rotor (11) et s'étendant le long du premier axe de rotation X, un arbre de sortie (29) et un mécanisme de transmission (25) agencé de manière à transmettre le couple entre l'arbre de transmission (19) et l'arbre de sortie (29),
- un carter de transmission (20) définissant un espace interne (200) à l'intérieur duquel est disposé au moins une partie du mécanisme de transmission (25), notamment une roue dentée entrainée par l'arbre de transmission (19),
- un support de stator (14) présentant un logement interne s'étendant le long du premier axe de rotation (X), le stator (12) étant fixé au support de stator (14) à l'intérieur de ce logement interne,
- une chambre de refroidissement (15) délimitée en partie par une face radialement externe du support de stator (14), le support de stator (14) comprenant deux gorges annulaires (16, 17) s'étendant autour du premier axe de rotation (X) et disposées axialement de part et d'autre de la chambre de refroidissement (15), chaque gorge annulaire (16, 17) accueillant un joint annulaire disposé de manière à assurer l'étanchéité de la chambre de refroidissement (15),
**caractérisé en ce que** le support de stator (14) est formé dans une pièce distincte du carter de transmission (20) et comprend une zone de fixation (140) fixée sur le carter de transmission; la zone de fixation (140) étant située plus proche du premier axe de rotation (X) que le stator (12).

2. Ensemble de transmission (1) selon la revendication 1 comprenant aussi une enveloppe externe de machine électrique (13) disposée radialement à l'extérieur du support de stator (14); la chambre de refroidissement (15) étant délimitée en partie par une face radialement interne de l'enveloppe externe de machine électrique (13).

3. Ensemble de transmission (1) selon la revendication 2 dans lequel l'enveloppe externe de machine électrique est formée dans une pièce distincte du carter de transmission, la pièce dans laquelle l'enveloppe externe de machine électrique est réalisée formant ainsi un carter de machine électrique.

4. Ensemble de transmission (1) selon la revendication 2 dans lequel l'enveloppe externe de machine électrique est formée dans une portion cylindrique ou tronconique du carter de transmission s'étendant axialement.

5. Ensemble de transmission (1) selon l'une des revendications précédentes dans lequel un premier palier (41), notamment un premier palier à roulements, est intercalé radialement entre le carter de transmission (20) et l'arbre de transmission (19).

6. Ensemble de transmission (1) selon la revendication précédente dans lequel le support de stator est agencé à distance du premier palier (41).

7. Ensemble de transmission (1) selon l'une des revendications précédentes dans lequel le support de stator (14) comprend un flasque (143) agencé autour du premier axe de rotation (X), la zone de fixation (140) du support de stator étant située sur ce flasque (143).

8. Ensemble de transmission (1) selon l'une des revendications précédentes dans lequel le support de stator (14) et le carter de transmission sont assemblés l'un contre l'autre avec des éléments d'assemblage tels que des vis ou des rivets.

9. Ensemble de transmission (1) selon la revendication précédente dans lequel le carter de transmission comporte une zone de liaison coopérant avec la zone de fixation (140) du support de stator (14), la zone de liaison comprenant un premier groupe de trous et la zone de fixation (140) du support de stator (14) comprenant un deuxième groupe de trous agencés axialement en vis-à-vis du premier groupe de trous, et les éléments d'assemblage tels que des vis assurent l'assemblage du support de stator et du carter de transmission, les trous du premier groupe de trous étant des trous borgnes.

10. Ensemble de transmission (1) selon l'une des revendications précédentes dans lequel le carter de transmission (20) comprend une première pièce de carter (21) ayant :
- une première portion (21A) dotée de la zone de liaison coopérant avec la zone de fixation (140) du support de stator (14), et
- une deuxième portion (21B) recouvrant radialement une partie de l'enveloppe externe de machine électrique (13) de sorte qu'il existe un plan (P) perpendiculaire au premier axe de rotation (X) qui traverse la chambre de refroidissement (15) et qui coupe la deuxième portion (21B) de la première pièce de carter (21) ; la première portion (21A) et la deuxième portion(21B) de l'ensemble de transmission recouvrant chacune une partie du mécanisme de transmission (25).

11. Ensemble de transmission (1) selon la revendication précédente dans lequel un différentiel est agencé au moins en partie dans la deuxième portion (21B) de la première pièce de carter (21).

12. Ensemble de transmission (1) selon la revendication 3 dans lequel le carter de transmission présente une première surface de centrage (241) s'étendant autour du premier axe de rotation (X), le support de stator (14) comprenant une surface de centrage coopérant avec la première surface de centrage (241) du carter de transmission; le carter de transmission présentant une deuxième surface de centrage (242) s'étendant autour du premier axe de rotation (X); le carter de machine électrique (18) comprenant une surface de centrage coopérant avec la deuxième surface de centrage (242) du carter de transmission.

13. Ensemble de transmission (1) selon la revendication précédente dans lequel le carter de transmission comprend un anneau de centrage (24) agencé autour du premier axe de rotation X et faisant saillie axialement vers le stator; la première surface de centrage (241) étant disposée sur la face radialement interne de cet anneau de centrage (24); et la deuxième surface de centrage (242) étant disposée sur la face radialement externe de cet anneau de centrage (24).

14. Procédé d'assemblage d'un ensemble de transmission (1) pour un véhicule, ledit procédé d'assemblage comprenant les étapes suivantes :
- fournir un rotor (11) et un stator (12) de machine électrique,
- fournir un dispositif de transmission (28) comprenant au moins une partie d'un arbre de transmission (19) apte à être entraînée par le rotor (11) et s'étendant le long d'un premier axe de rotation X, un arbre de sortie (29) et un mécanisme de transmission (25) agencé de manière à transmettre le couple entre l'arbre de transmission (19) et l'arbre de sortie (29), ainsi qu'un carter de transmission (20) définissant un espace interne (200) à l'intérieur duquel est disposé au moins une partie du mécanisme de transmission (25), notamment un pignon entrainé par l'arbre de transmission (19),
- fournir un support de stator (14) comprenant une chambre de refroidissement (15) délimitée en partie par une face radialement externe du support de stator (14), le support de stator (14) comprenant deux gorges annulaires (16, 17) s'étendant autour du premier axe de rotation (X) et disposées axialement de part et d'autre de la chambre de refroidissement (15), chaque gorge annulaire (16, 17) pouvant accueillir un joint annulaire disposé de manière à assurer l'étanchéité de la chambre de refroidissement (15), le support de stator (14) étant formé dans une pièce distincte du carter de transmission (20) et le support de stator (14) comprenant une zone de fixation (140), le carter de transmission comportant une zone de liaison coopérant avec la zone de fixation (140) du support de stator (14),
le procédé d'assemblage comprenant en outre les étapes suivantes :
- monter le stator dans le logement interne du support de stator (14) et fixer la zone de fixation du support de stator sur la zone de liaison du carter de transmission de telle sorte que le rotor et le stator s'étendent le long du premier axe de rotation X, la zone de fixation (140) étant située plus proche du premier axe de rotation (X) que le stator (12),
- puis monter le rotor mobile en rotation autour du premier axe de rotation (X) et solidaire en rotation de l'arbre de transmission (19), radialement à l'intérieur du stator.

## Patentansprüche

1. Getriebeanordnung (1) für ein Fahrzeug, wobei die Getriebeanordnung Folgendes aufweist:
- eine elektrische Maschine (10) mit einem Rotor (11), der um eine erste Drehachse (X) herum drehbar ist, und einem Stator (12), der radial außerhalb des Rotors angeordnet ist,
- eine Getriebevorrichtung (28) mit einer Getriebewelle (19), die von dem Rotor (11) angetrieben wird und sich entlang der ersten Drehachse X erstreckt, einer Abtriebswelle (29) und einem Getriebemechanismus (25), der so angeordnet ist, dass er das Drehmoment zwischen der Getriebewelle (19) und der Abtriebswelle (29) überträgt,
- ein Getriebegehäuse (20), das einen Innenraum (200) definiert, in dem mindestens ein Teil des Getriebemechanismus (25) angeordnet ist, insbesondere ein Zahnrad, das von der Getriebewelle (19) angetrieben wird,
- einen Statorhalter (14) mit einer inneren Aufnahme, die sich entlang der ersten Drehachse (X) erstreckt, wobei der Stator (12) innerhalb dieser inneren Aufnahme an dem Statorhalter (14) befestigt ist,
- eine Kühlkammer (15), die teilweise von einer radial äußeren Fläche des Statorhalters (14) begrenzt wird, wobei der Statorhalter (14) zwei ringförmige Nuten (16, 17) aufweist, die sich um die erste Drehachse (X) herum erstrecken und axial auf beiden Seiten der Kühlkammer (15) angeordnet sind, wobei jede ringförmige Nut (16, 17) eine ringförmige Dichtung aufnimmt, die so angeordnet ist, dass sie die Kühlkammer (15) abdichtet,
**dadurch gekennzeichnet, dass** der Statorhalter (14) in einem von dem Getriebegehäuse (20) getrennten Teil ausgebildet ist und einen Befestigungsbereich (140) aufweist, der an dem Getriebegehäuse befestigt ist, wobei der Befestigungsbereich (140) näher an der ersten Drehachse (X) als der Stator (12) angeordnet ist.

2. Getriebeanordnung (1) nach Anspruch 1, die darüber hinaus einen Außenmantel (13) einer elektrischen Maschine aufweist, der radial außerhalb des Statorhalters (14) angeordnet ist, wobei die Kühlkammer (15) teilweise durch eine radial innere Fläche des Außenmantels (13) der elektrischen Maschine begrenzt wird.

3. Getriebeanordnung (1) nach Anspruch 2, wobei der Außenmantel der elektrischen Maschine in einem vom Getriebegehäuse getrennten Teil ausgebildet ist, wobei das Teil, in dem der Außenmantel der elektrischen Maschine ausgebildet ist, somit ein Gehäuse der elektrischen Maschine bildet.

4. Getriebeanordnung (1) nach Anspruch 2, wobei der Außenmantel der elektrischen Maschine in einem sich axial erstreckenden zylindrischen oder kegelstumpfförmigen Abschnitt des Getriebegehäuses ausgebildet ist.

5. Getriebeanordnung (1) nach einem der vorhergehenden Ansprüche, wobei ein erstes Lager (41), insbesondere ein erstes Wälzlager, radial zwischen dem Getriebegehäuse (20) und der Getriebewelle (19) eingefügt ist.

6. Getriebeanordnung (1) nach dem vorhergehenden Anspruch, wobei der Statorhalter in einem Abstand vom ersten Lager (41) angeordnet ist.

7. Getriebeanordnung (1) nach einem der vorhergehenden Ansprüche, wobei der Statorhalter (14) einen Flansch (143) aufweist, der um die erste Drehachse (X) herum angeordnet ist, und der Befestigungsbereich (140) des Statorhalters an diesem Flansch (143) angeordnet ist.

8. Getriebeanordnung (1) nach einem der vorhergehenden Ansprüche, wobei der Statorhalter (14) und das Getriebegehäuse mit Verbindungselementen wie Schrauben oder Nieten aneinandergefügt sind.

9. Getriebeanordnung (1) nach dem vorhergehenden Anspruch, wobei das Getriebegehäuse einen Verbindungsbereich aufweist, der mit dem Befestigungsbereich (140) des Statorhalters (14) zusammenwirkt, und der Verbindungsbereich eine erste Gruppe von Löchern aufweist und der Befestigungsbereich (140) des Statorhalters (14) eine zweite Gruppe von Löchern aufweist, die axial gegenüber der ersten Gruppe von Löchern angeordnet sind, und Verbindungselemente wie Schrauben dafür sorgen, dass der Statorhalter und das Getriebegehäuse miteinander verbunden werden, wobei die Löcher der ersten Gruppe von Löchern Sacklöcher sind.

10. Getriebeanordnung (1) nach einem der vorhergehenden Ansprüche, wobei das Getriebegehäuse (20) ein erstes Gehäuseteil (21) mit folgenden Abschnitten aufweist:
- einen ersten Abschnitt (21A), der mit dem Verbindungsbereich versehen ist, der mit dem Befestigungsbereich (140) des Statorhalters (14) zusammenwirkt, und
- einen zweiten Abschnitt (21B), der einen Teil des Außenmantels (13) der elektrischen Maschine radial abdeckt, so dass es eine Ebene (P) senkrecht zur ersten Drehachse (X) gibt, die durch die Kühlkammer (15) verläuft und den zweiten Abschnitt (21B) des ersten Gehäuseteils (21) schneidet, wobei der erste Abschnitt (21A) und der zweite Abschnitt (21B) der Getriebeanordnung jeweils einen Teil des Getriebemechanismus (25) abdecken.

11. Getriebeanordnung (1) nach dem vorhergehenden Anspruch, wobei ein Differential zumindest teilweise im zweiten Abschnitt (21B) des ersten Gehäuseteils (21) angeordnet ist.

12. Getriebeanordnung (1) nach Anspruch 3, wobei das Getriebegehäuse eine erste Zentrierfläche (241) aufweist, die sich um die erste Drehachse (X) herum erstreckt, und der Statorhalter (14) eine Zentrierfläche aufweist, die mit der ersten Zentrierfläche (241) des Getriebegehäuses zusammenwirkt, und das Getriebegehäuse eine zweite Zentrierfläche (242) aufweist, die sich um die erste Drehachse (X) herum erstreckt, und das Gehäuse der elektrischen Maschine (18) eine Zentrierfläche aufweist, die mit der zweiten Zentrierfläche (242) des Getriebegehäuses zusammenwirkt.

13. Getriebeanordnung (1) nach dem vorhergehenden Anspruch, wobei das Getriebegehäuse einen Zentrierring (24) aufweist, der um die erste Drehachse X herum angeordnet ist und axial in Richtung des Stators vorsteht, wobei die erste Zentrierfläche (241) an der radial inneren Seite des Zentrierrings (24) angeordnet ist und die zweite Zentrierfläche (242) an der radial äußeren Seite des Zentrierrings (24) angeordnet ist.

14. Verfahren zur Montage einer Getriebeanordnung (1) für ein Fahrzeug, wobei das Montageverfahren die folgenden Schritte aufweist:
- Bereitstellen eines Rotors (11) und eines Stators (12) einer elektrischen Maschine,
- Bereitstellen eine Getriebevorrichtung (28), die mindestens einen Teil einer Getriebewelle (19), die von dem Rotor (11) angetrieben werden kann und sich entlang einer ersten Drehachse X erstreckt, eine Abtriebswelle (29) und einen Getriebemechanismus (25) aufweist, der so angeordnet ist, dass er das Drehmoment zwischen der Getriebewelle (19) und der Abtriebswelle (29) überträgt, sowie ein Getriebegehäuse (20), das einen Innenraum (200) definiert, in dem mindestens ein Teil des Getriebemechanismus (25) angeordnet ist, insbesondere ein Zahnrad, das von der Getriebewelle (19) angetrieben wird,
- Bereitstellen eines Statorhalters (14), der eine Kühlkammer (15) aufweist, die teilweise von einer radial äußeren Fläche des Statorhalters (14) begrenzt wird, wobei der Statorhalter (14) zwei ringförmige Nuten (16, 17) aufweist, die sich um die erste Drehachse (X) herum erstrecken und axial auf beiden Seiten der Kühlkammer (15) angeordnet sind, wobei jede ringförmige Nut (16, 17) eine ringförmige Dichtung aufnehmen kann, die so angeordnet ist, dass sie die Kühlkammer (15) abdichtet, wobei der Statorhalter (14) in einem von dem Getriebegehäuse (20) getrennten Teil ausgebildet ist und der Statorhalter (14) einen Befestigungsbereich (140) aufweist, wobei das Getriebegehäuse einen Verbindungsbereich aufweist, der mit der Befestigungsbereich (140) des Statorhalters (14) zusammenwirkt,
wobei das Montageverfahren darüber hinaus die folgenden Schritte aufweist:
- Montieren des Stators in der inneren Aufnahme des Statorhalters (14) und Befestigen des Befestigungsbereichs des Statorhalters an dem Verbindungsbereich des Getriebegehäuses, so dass sich der Rotor und der Stator entlang der ersten Drehachse X erstrecken, wobei der Befestigungsbereich (140) näher an der ersten Drehachse (X) als der Stator (12) angeordnet ist,
- dann radiales Montieren des Rotors, der um die erste Drehachse (X) herum drehbar und drehfest mit der Getriebewelle (19) verbunden ist, im Inneren des Stators.

## Claims

1. Transmission assembly (1) for a vehicle, said transmission assembly comprising:
- an electric machine (10) comprising a rotor (11) rotatable about a first axis of rotation (X) and a stator (12) arranged radially outside the rotor,
- a transmission device (28) comprising a transmission shaft (19) driven by the rotor (11) and extending along the first axis of rotation X, an output shaft (29) and a transmission mechanism (25) arranged so as to transmit the torque between the transmission shaft (19) and the output shaft (29),
- a transmission casing (20) defining an internal space (200) inside which is arranged at least part of the transmission mechanism (25), in particular a toothed wheel driven by the transmission shaft (19),
- a stator support (14) having an internal housing extending along the first axis of rotation (X), the stator (12) being attached to the stator support (14) inside this internal housing,
- a cooling chamber (15) delimited in part by a radially external face of the stator support (14), the stator support (14) comprising two annular grooves (16, 17) extending around the first axis of rotation (X) and arranged axially on either side of the cooling chamber (15), each annular groove (16, 17) accommodating an annular seal arranged so as to ensure sealing of the cooling chamber (15),
**characterized in that** the stator support (14) is formed in a part separate from the transmission casing (20) and comprises an attachment zone (140) attached to the transmission casing; the attachment zone (140) being situated closer to the first axis of rotation (X) than the stator (12).

2. Transmission assembly (1) according to Claim 1, also comprising an external electric machine envelope (13) arranged radially outside the stator support (14); the cooling chamber (15) being delimited in part by a radially internal face of the external electric machine envelope (13).

3. Transmission assembly (1) according to Claim 2, wherein the external electric machine envelope is formed in a part separate from the transmission casing, the part in which the external electric machine envelope is formed thus forming an electric machine casing.

4. Transmission assembly (1) according to Claim 2, wherein the external electric machine envelope is formed in a cylindrical or frustoconical portion of the transmission casing extending axially.

5. Transmission assembly (1) according to one of the preceding claims, wherein a first bearing (41), in particular a first rolling bearing, is interposed radially between the transmission casing (20) and the transmission shaft (19).

6. Transmission assembly (1) according to the preceding claim, wherein the stator support is arranged at a distance from the first bearing (41).

7. Transmission assembly (1) according to one of the preceding claims, wherein the stator support (14) comprises a flange (143) arranged around the first axis of rotation (X), the attachment zone (140) of the stator support being situated on this flange (143).

8. Transmission assembly (1) according to one of the preceding claims, wherein the stator support (14) and the transmission casing are assembled one against the other with assembly elements such as screws or rivets.

9. Transmission assembly (1) according to the preceding claim, wherein the transmission casing comprises a connection zone cooperating with the attachment zone (140) of the stator support (14), the connection zone comprising a first group of holes and the attachment zone (140) of the stator support (14) comprising a second group of holes arranged axially opposite the first group of holes, and the assembly elements such as screws ensure the assembly of the stator support and the transmission casing, the holes of the first group of holes being blind holes.

10. Transmission assembly (1) according to one of the preceding claims, wherein the transmission casing (20) comprises a first casing part (21) having:
- a first portion (21A) provided with the connection zone cooperating with the attachment zone (140) of the stator support (14), and
- a second portion (21B) radially covering part of the external electric machine envelope (13) so that there is a plane (P) perpendicular to the first axis of rotation (X) which passes through the cooling chamber (15) and which intersects the second portion (21B) of the first casing part (21); the first portion (21A) and the second portion (21B) of the transmission assembly each covering part of the transmission mechanism (25).

11. Transmission assembly (1) according to the preceding claim, wherein a differential is arranged at least in part in the second portion (21B) of the first casing part (21) .

12. Transmission assembly (1) according to Claim 3, wherein the transmission casing has a first centring surface (241) extending around the first axis of rotation (X), the stator support (14) comprising a centring surface cooperating with the first centring surface (241) of the transmission casing; the transmission casing having a second centring surface (242) extending around the first axis of rotation (X); the electric machine casing (18) comprising a centring surface cooperating with the second centring surface (242) of the transmission casing.

13. Transmission assembly (1) according to the preceding claim, wherein the transmission casing comprises a centring ring (24) arranged around the first axis of rotation X and projecting axially toward the stator; the first centring surface (241) being arranged on the radially internal face of this centring ring (24); and the second centring surface (242) being arranged on the radially external face of this centring ring (24).

14. Method for assembling a transmission assembly (1) for a vehicle, said assembly method comprising the following steps:
- providing a rotor (11) and a stator (12) of an electric machine,
- providing a transmission device (28) comprising at least part of a transmission shaft (19) able to be driven by the rotor (11) and extending along a first axis of rotation X, an output shaft (29) and a transmission mechanism (25) arranged so as to transmit the torque between the transmission shaft (19) and the output shaft (29), and a transmission casing (20) defining an internal space (200) inside which is arranged at least part of the transmission mechanism (25), in particular a pinion driven by the transmission shaft (19),
- providing a stator support (14) comprising a cooling chamber (15) delimited in part by a radially external face of the stator support (14), the stator support (14) comprising two annular grooves (16, 17) extending around the first axis of rotation (X) and arranged axially on either side of the cooling chamber (15), each annular groove (16, 17) being able to accommodate an annular seal arranged so as to ensure sealing of the cooling chamber (15), the stator support (14) being formed in a part separate from the transmission casing (20) and the stator support (14) comprising an attachment zone (140), the transmission casing comprising a connection zone cooperating with the attachment zone (140) of the stator support (14),
the assembly method further comprising the following steps:
- mounting the stator in the internal housing of the stator support (14) and attaching the attachment zone of the stator support to the connection zone of the transmission casing in such a way that the rotor and the stator extend along the first axis of rotation X, the attachment zone (140) being situated closer to the first axis of rotation (X) than the stator (12),
- then mounting the rotor, which is rotatable about the first axis of rotation (X) and coupled in rotation with the transmission shaft (19), radially inside the stator.
